# EUROPEAN PATENT APPLICATION

(11) **EP 4 627 964 A1**
(43) Date of publication of application: **08.10.2025**
(21) Application number: 24168257.4
(22) Date of filing: 03.04.2024
(51) Int. Cl.: A45C 5/03, B29C 33/44, B29C 45/44

(54) **INTEGRAL INNER RIM FOR INJECTION MOULDED HARD-SIDED LUGGAGE CASES**

(71) Applicant: Samsonite IP Holdings S.à r.l., 1931 Luxembourg (LU)
(72) Inventor: MEERSSCHAERT, Reinhard, 9820 Merelbeke (BE)
(74) Representative: Smith, Mark David

(57) **Abstract**

A luggage case (100, 500) including at least one injection moulded shell (118, 120, 520) having an interior region and including a sidewall (152, 154, 552, 554) defining at least in part an integrally formed outer rim (202, 602) and an integrally formed inner rim (212, 612) positioned interior of the outer rim (202, 602). The inner rim (212, 612) extends along at least a portion of the length of the outer rim (202, 602), and the inner rim (212, 612) extends at an acute angle (240, 406, 412) away from the sidewall (152, 154, 552, 554). Support features (222, 622) extend between the outer rim (202, 602) and the inner rim (212, 612).

## Description

### FIELD

The described embodiments relate generally to injection moulded luggage cases, and methods of moulding thereof.

### BACKGROUND

Travelers often prefer hard-sided luggage cases for the increased durability and protection the luggage cases provide to the contents of luggage cases during travel. Hard-sided luggage cases may also be aesthetically appealing to travelers. Common forms of hard-sided luggage cases include metal and plastic luggage cases. However, metal luggage cases are often considerably heavier or more expensive to manufacture. While plastic cases are lighter and more cost effective to manufacture than metal luggage cases, plastic cases often require multi-part moulds, such as using sliders, to provide a preferred article shape, level of durability or structural integrity. The moulding methods and techniques can be complicated and more expensive given the use of multi-part moulds, and may also result in externally visible structure that detracts from the aesthetic appeal of the plastic luggage cases.

Accordingly, there is a need for moulded luggage cases that are durable and have desired structural integrity. There is also a need for moulded luggage cases that include the desired structure and strength that require fewer moulding components during the moulding step.

### SUMMARY

Embodiments of the present invention are directed to a luggage case. The luggage case includes at least one injection moulded shell including an internal storage volume and including a sidewall defining at least in part an integrally formed outer rim, and an integrally formed inner rim positioned interior of the outer rim, wherein the inner rim extends along at least a portion of the length of the outer rim, the inner rim extends at an acute angle away from the sidewall, and support features extend between the outer rim and the inner rim.

In another example, a luggage case may include at least one injection moulded shell including a major face and at least one sidewall together defining an internal storage volume, the sidewall defining at least in part an integrally formed outer rim and an integrally formed inner rim positioned interior of the outer rim, and wherein the inner rim extends along at least a portion of the length of the outer rim, and the inner rim extends at an acute angle away from the sidewall.

Additionally, in some examples, the sidewall extends from along at least a portion of the periphery of the major face panel, the sidewall including at least one corner region, and the outer rim is defined to at least partially extend along the sidewall and the at least one corner region, and the inner rim extends along at least a portion of sidewall and along the at least one corner region.

In some examples, the inner rim extends along at least a portion of each of the at least two adjacent sidewalls and along the at least one corner region.

In some examples, the inner rim is offset below the outer rim.

In some examples, the inner rim extends around approximately 50-90 percent of a length of the outer rim.

In some examples, the inner rim extends continuously along a majority of the length of the sidewall.

In some examples, the inner rim extends linearly along the sidewalls.

In some examples, the inner rim extends around the entirety of the length of the outer rim.

In some examples, at least a portion of the inner rim is positioned further inwardly than the sidewalls towards the internal volume.

In some examples, the inner rim where formed on the sidewalls is continuous, and in other examples may be segmented. A continuous inner rim provides robust stiffening to the outer rim. A segmented inner rim provides some stiffening while using less material than a continuous inner rim.

In some examples, the inner rim defines a ledge (also a flange or collar) extending from the at least one sidewall.

In some examples, support features extend between the outer rim and the inner rim. Additionally, the support features may extend at a non-orthogonal angle between the outer rim and the inner rim, which provides sufficient strength as well as allows for some deflection between the inner rim and outer rim.

In some examples, the support features are positioned in a direction orthogonal to the major face panel, which is the release direction of the mould, making the release of the support features more convenient.

In some examples, the support features are resilient and allow the inner rim to deflect relative to the outer rim.

In some examples, the wherein the outer rim is flush with an exterior surface of at least one sidewall. In some examples, the rim band is flush with a field region. In some examples, the rim band is devoid of raised structural features. In some examples, the outer rim is devoid of exterior raised structural features. In some examples, the outer rim is flush with an exterior surface of at least one sidewall. Having a flush surface, such as a surface without raised structural features, provides a cleaner appearance.
In some examples, the sidewall extends orthogonally from the major face panel. In other examples, the sidewall includes a top panel and an opposing bottom panel; and the bottom panel extends from the major face panel at an angle from approximately 90 to 98 degrees. In some examples, the bottom panel extends from the major face panel at approximately 98 degrees relative to the major face panel. These angles may allow for other panels of the case, such as the top panel opposite the bottom panel, to be orthogonal with the major face while having sufficient draft in a mould for adequate release from the mould.

In some examples, wherein the acute angle between the inner rim and the sidewall is approximately between and including 1 and 14 degrees, or is approximately between and including 4 and 6 degrees. In another example, it may be approximately 6 degrees.

In some examples, the acute angle between the inner rim and the sidewall is approximately between and including 80 and 94 degrees relative to the major face panel.

In some examples, the shell includes a first portion of the sidewall oriented orthogonal relative to the major face panel and a second portion of the sidewall oriented at an outward angle to the major face panel greater than the first sidewall.

In some examples, the inner rim forms an angled surface for sliding contact with a mould core during removal of the shell from a mould. In some examples, the inner rim deflects outwardly upon release from a mould core. In some examples, the inner rim and outer rim deflects outwardly upon release from a mould core.

In some examples, the inner rim includes a first portion and a second portion extending along different portions of the outer rim and defining a gap there between. In some examples, an insert is coupled to a first end of the first portion and a second end of the second portion and extends across the gap. In some examples, the first portion and second portion of the inner rim are adjacent to a corner region and the gap is defined at the corner region. In some examples, the outer rim has a first thickness the corner region and a thinner second thickness in the corner region. In some examples, the insert includes a shelf (e.g. a shoulder) extending along the corner region between the adjacent sides to support the corner region, and an insert rim extending from the shelf and positioned adjacent with the outer rim. In some examples, the insert rim and outer rim at the corner region have a combined thickness similar to or the same as the first thickness. In some examples, the insert rim and the outer rim are coupled by stitching. In some examples, the stitching couples a closure assembly to the outer rim.

In some examples, the first portion and second portion of the inner rim, and the gap formed between, are located on one sidewall of the shell. In some examples, the insert includes a handle extending outwardly relative to an exterior surface of the shell. In some examples, the inner rim defines an attachment feature at the opposing first and second ends. In some examples, the insert defines a reception channel at each opposing end, and the attachment features are received in the respective reception channel to couple the inserts to the inner rim. In some examples, the inner rim is positioned in a corner region of the shell.

In some examples, the second sidewall is oriented between and including 90 and 98 degrees relative to the major face panel.

In some examples, the injection moulded shell wherein the sidewall includes two or more sidewalls and a corner region positioned between the at least two sidewalls, and wherein the shell is formed in a mould including a mould core. In some examples, the inner rim elastically deflects outwardly upon engaging the mould core during separation of the injection moulded shell and the mould core.

In some examples, the two or more sidewalls elastically deflect outwardly, and the corner region elastically deflects inwardly, upon engaging the mould core during separation of the injection-moulded shell and the mould core.

In some examples, the shell further includes a corner region and the corner region elastically deflects inwardly during separation of the shell and the mould core.

In some examples, the inner rim extends continuously through the corner region and defining a first width between the inner rim and the outer rim, and during separation of the shell and the mould core the inner rim resiliently deflects outwardly to define a second width between the inner rim and the outer rim, the second width less than the first width.

In some examples, the luggage case further includes at least one wheel mounted on a corner region of a bottom panel of the luggage shell, and a tow handle mounted on a rear main face panel of the luggage shell.
In another example, a method for injection moulding a luggage case is disclosed. The method includes providing a mould core movably positioned within an outer mould defining a mould cavity, the mould core defining the interior cavity of the shell and outer mould defining the exterior of the shell; a portion of the mould cavity defining at least one sidewall of the shell, and another portion of the mould cavity defining an inner rim positioned on the at least one sidewall, the inner rim positioned more inwardly toward the interior cavity of the shell than the at least one sidewall. Additionally, the mould core and outer mould separate along a separation direction, and the portion of the mould cavity defining the major face of the luggage shell is oriented non-orthogonally to the separation direction.

In some examples, portions of the mould cavity define a first sidewall of the injection moulded shell, a second sidewall of the injection moulded shell, and a corner region having a radius of curvature and defining an intersection between the first sidewall and the second sidewall.

In some examples, during separation of the mould core and the injection moulded shell, the first sidewall and second sidewall expand outward and the radius of curvature of the corner region increases.

In some examples, a portion of the mould cavity defines a top sidewall of the injection-moulded shell, and another portion defines a bottom sidewall of the injection-moulded shell.

In some examples, the first sidewall is the top sidewall and the second sidewall is the bottom sidewall.

In some examples, the outer mould and mould core separate along a direction of separation non-orthogonal to a portion of the mould cavity defining the major panel.

In some examples, a portion of the mould cavity defines the top sidewall orthogonal to the major panel, and another portion of the mould cavity defines the bottom sidewall at an angle relative to the major panel.

In some examples, the acute angle between the inner rim and the outer rim elastically decreases during separation of the mould core from the injection moulded shell.

In some examples, the inner rim is parallel or extends at an angle to intersect a separation direction of the mould core and the outer mould.

In some examples of the luggage case formed by the method, the injection moulded shell includes a panel defining a front or rear of the luggage case, and the one or more sidewalls include an orthogonal sidewall extending from the panel and an opposing sidewall extending from the panel opposite the orthogonal sidewall, the opposing sidewall extending outwardly relative to the orthogonal sidewall.

In some examples, the orthogonal sidewall is the top sidewall and the opposing sidewall is the bottom sidewall.

In some examples, the opposing sidewall is extends outwardly at an angle between 90 and 98 degrees relative to the panel.

In some examples, the inner rim extends along at least a portion of each of the orthogonal sidewall and the opposing sidewall.

In some examples, the acute angle between the inner rim and the one or more sidewalls is approximately between 1 and 14 degrees.

In some examples, the acute angle between the inner rim and the one or more sidewalls is approximately 6 degrees.

In some examples of the luggage case formed by the method, the luggage case further includes at least one wheel mounted on a corner region of a bottom panel of the luggage shell, and a tow handle mounted on a rear main face panel of the luggage shell.

In another example, a luggage case is disclosed. The luggage case includes an integrally formed injection moulded shell including an internal storage volume and including a major face, a first sidewall extending approximately orthogonal from the major face, a second sidewall extending from the major face opposite the first sidewall and at an angle outward relative to the first sidewall, an outer rim, and an integral inner rim positioned along a portion of the interior of the first sidewall or second sidewall. The inner rim extends along at least a portion of the length of the outer rim, and the inner rim extends at an acute angle inwardly away from the sidewall.

In some examples, the angle of the second sidewall is between approximately 4 and 8 degrees. In some examples, the acute angle between the inner rim and the sidewall is approximately between zero and four degrees. In some examples, the inner rim deflects upon release from a mould core. In some examples, the inner rim and outer rim deflects outwardly upon release from a mould core. In some examples, support features extending between the inner rim and the outer rim at a non-orthogonal angle between the outer rim and the inner rim. In some examples, the inner rim extends continuously along a majority of the periphery of the luggage shell. In some examples, an acute angle is defined between the inner rim and the first or second sidewall and the acute angle is approximately between zero and four degrees.

In another example, a mould assembly for forming a luggage shell of a luggage case is disclosed, the mould assembly including a mould core and an outer mould. The mould core and the outer mould define a mould cavity to define the integrally moulded shell, the mould core and outer mould separate along a direction of separation, and the portion of the mould cavity defining the major face is oriented non-orthogonally to the direction of separation.

In some examples, the angle of a portion of the mould cavity defining a sidewall is between approximately 86 and 94 degrees relative to portion of the mould cavity defining the major face relative to the portion of the mould cavity defining the major face. In other examples, the mould assembly includes an acute angle between a portion of the mould cavity defining an inner rim and the portion of the mould cavity defining the sidewall is approximately between 1 and 14 degrees.

In another example, an injection mould assembly for injection moulding a luggage shell of a luggage case includes a mould core and an outer mould wherein the mould core and the outer mould define a mold cavity, the mould core and outer mould separate along a separation direction, and the portion of the mould cavity defining the major face of the luggage shell is oriented non-orthogonally to the separation direction. Additionally, the angle of a portion of the mould cavity defining a sidewall of the luggage shell is between approximately 86 and 94 degrees relative to portion of the mould cavity defining the major face.

Additionally or optionally, the acute angle between a portion of the mould cavity defining an inner rim of the luggage shell and the portion of the mould cavity defining the sidewall is approximately between 1 and 14 degrees.

A number of feature refinements and additional features are applicable and contemplated in light of the present disclosure. These feature refinements and additional features may be used individually or in any combination. As such, each of the following features that are discussed may be, but are not required to be, used with any other feature combination of the first aspect.

In addition to the exemplary aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 depicts a front right perspective view of an example luggage case;
FIG. 2 depicts a front right perspective view of an example luggage case in an open configuration;
FIG. 3A depicts a perspective view of a rim portion, and inserts coupled to the rim portion, of an example luggage shell;
FIG. 3B depicts an exploded view of the rim portion and inserts of FIG. 3A;
FIG. 4A depicts a plan view of a rim portion and corner region of an example luggage shell;
FIG. 4B depicts a cross sectional view of the rim portion as indicated by line 4B-4B in FIG. 4A;
FIG. 5A depicts a perspective view of an example corner insert;
FIG. 5B depicts a perspective view of the example corner insert of FIG. 5A coupled to an example rim portion;
FIG. 5C depicts a cross sectional view of the example corner insert and rim portion as indicated by line 5C-5C in FIG. 5B;
FIG. 5D depicts a plan view of the example corner insert of FIG. 5B coupled to an example rim portion;
FIG. 6 depicts a perspective view of a corner region of an example luggage case including the corner insert and a closure assembly;
FIG. 7 depicts a cross sectional view of an example handle insert as indicated by line 7A-7A in FIG. 3A;
FIG. 8A depicts a cross sectional view of an example luggage shell including the rim portion and an example male mould;
FIG. 8B depicts a cross sectional view of the example luggage case of FIG. 8A during removal of the male mould;
FIG. 8C depicts a plan view of the example luggage shell and male mould of FIG. 8A;
FIG. 8D depicts a cross sectional plan view of the example luggage shell and male mould during remove the male mould as indicated by line 8D-8D in FIG. 8B;
FIG. 9A depicts a cross sectional view of the example luggage shell taken from line 9A-9A of Fig. 2.
FIG. 9B depicts an exploded cross sectional view of an example luggage shell and mould assembly;
FIG. 9C shows the respective angle between the top wall and a major face, the bottom wall and a major face, and a sidewall and a major face.
FIG. 10 depicts an perspective view of an example luggage shell and rim portion;
FIG. 11A depicts a plan view of an example male mould and an example luggage shell;
FIG. 11B depicts a plan view of the example luggage shell of FIG. 11A during removal of the example male mould.

### DETAILED DESCRIPTION

The description that follows includes sample products, systems, methods, and/or apparatuses that embody various elements of the present disclosure. However, it should be understood that the described disclosure may be practiced in a variety of forms in addition to those described herein.

The following disclosure relates generally to a luggage case including at least one moulded luggage shell having an integrally formed inner rim. The luggage case may include two or more shells selectively connected by a closure mechanism. The shells may include a rim portion. The rim portion may include a peripheral or outer rim. The rim portion may include the integrally formed inner rim, which is positioned on the interior of the shell relative to the peripheral or outer rim. The inner rim may extend along a portion of the length of the interior of the shell. In some examples, the inner rim may extend along the peripheral rim in a discontinuous manner. In some examples, the inner rim may extend continuously along the peripheral rim of the shell. For example, the inner rim may extend around or along all or part of the lengths of the sidewalls of the shell and/or along the corners of the shell. The inner rim extends inwardly or towards the interior of the shell relative to the outer rim. Structural supports may extend between the outer rim and the inner rim. The inner rim may provide structural support to the shell. Optionally, the exterior of the shell adjacent at the rim portion may be featureless or smooth for an aesthetically pleasing exterior. For example, the exterior of the shell adjacent the outer rim may or may not include a raised ridge or shoulder. In some examples, the rim portion may include a raised ridge or shoulder to conceal or reduce the appearance of marks from a moulding process, such as sink marks.

In examples where the inner rim is discontinuous, the luggage case may optionally include inserts positioned in all or some of the gaps in the inner rim. The inserts may be coupled to the inner rim. For example, the inner rim may include two or more portions defining the gap and the insert may be positioned to extend between the two portions. The insert may provide structural support to the shell. In one example, the gap may be in a corner region of the outer rim, and the insert may be a corner insert extending supporting the corner region of the shell. The insert may reinforce the corner of the shell. In another example, the gap may be positioned along a side of the outer rim. The insert may form at least part of a structure to which a carry handle is coupled on an exterior of the shell. The handle insert may reinforce the rim region of the shell and support the concentrated load (such as for instance, a "point" load) created when the luggage case is supported by the carry handle.

The luggage shells may be formed by moulding. For example, the moulding may be injection moulding. An injection mould assembly may include an outer mould defining the exterior of the shell. The injection mould assembly may include a mould core defining the interior of the shell. When the mould core and the outer mould are positioned together, a mould cavity may be defined between the components. Heated material may be injected into the mould cavity to form the luggage shell or case. The mould core and outer mould are separable for removal of the moulded product in a direction of separation. To allow for separation without the damage to the moulded luggage shell, features of the mould core and outer mould may be positioned or defined at a draft angle relative to the direction of separation to limit contact between the moulded luggage shell and the mould core or outer mould.

The luggage case of the present disclosure may be configured such that a portion of the shell deflects, stretches, or flexes during separation of the shell and mould core. For example, the inner rim may deflect during separation of the shell and the mould core in response to contact with the mould core. In some examples, the sidewalls of the shell may deflect outwardly. The corner regions of the shell may stretch or flex inward to allow the deflection of the inner rim or sidewalls. By deflecting outwardly a portion of the luggage case, such as the inwardly extending the inner rim, the luggage case or rim portion may be formed without the use of a traditional mould slider (e.g. the internal mould component movable transverse to the direction of separation).

In some examples, the inner rim is discontinuous and forms a gap along one or more corner regions of the shell. During separation, the corner regions may deflect inwardly. When the corner region deflects inwardly, the other regions (such as the inner rim and/or the outer rim or both) may be allowed to expand or deflect outwardly, or deflect outwardly to a greater degree. The draft angles may be selected to limit or prevent plastic deformation of the corner region. In another example, the inner rim may contact the mould core to deflect outward towards the outer rim.

In some examples, the inner rim extends along at least a portion of the rim of the shell, including along one or more corner regions of the shell. During separation of the moulded product and mould core, the inner rim may elastically bend, flex, or deflect outwardly in some areas to allow the mould portions to separate and extract the shell. The corner regions may or may not extend outwardly. The inner rim may be deflected outwardly toward the outer rim. The outer rim may deflect outwardly with the inner rim. The draft angles may be selected to limit or prevent plastic or permanent deformation of the corner region.

In some examples, the mould core and the outer mould may define a mould cavity or mould volume oriented at an offset angle relative to the direction of separation. For example, the portion of the mould cavity defining the major face may be offset at an angle relative to the direction of separation. In some examples, one of the sidewalls may be positioned orthogonal to the direction of separation. An opposing sidewall may extend at an angle outwardly relative to the major face. The opposing sidewall angle and the offset angle may provide a draft angle for both the orthogonal sidewall and the opposing sidewall during separation of the mould core and the outer mould. By positioning the mould core and the outer mould at an angle, the core draft angle may define the draft angle for the orthogonal sidewall by reducing the outward angle of the opposing sidewall.

Reference will now be made to the accompanying drawings, which assist in illustrating various features of the present disclosure. The following description is presented for purposes of illustration and description. Furthermore, the description is not intended to limit the inventive aspects to the forms disclosed herein. Consequently, variations and modifications commensurate with the following teachings, and skill and knowledge of the relevant art, are within the scope of the present inventive aspects.

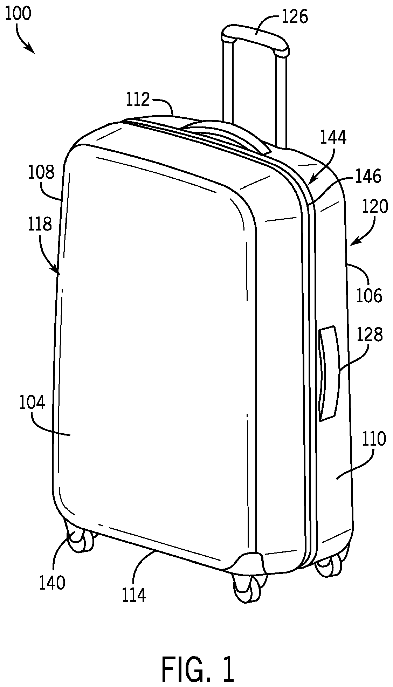

FIG. 1 shows an example luggage case 100 in a closed configuration. The luggage case 100 may be alternatively referred to as a luggage article, suitcase, bag, trolley, etc. In one example, the luggage case 100 may be an upright hard-sided case, such as a spinner luggage case. In other examples, the luggage article 100 may be many types of luggage, including a soft side spinner case with a moulded internal shell or panels, a hybrid spinner case, a container, or the like. The luggage case 100 may include at least two shells, such as a first or top shell 118 and a second or bottom shell 120. The shells 118, 120 may define an internal storage volume 130 to carry or store a traveler's belongings.

The luggage case 100 may include a plurality of panels or sides. For example, the luggage case may include a front panel 104 and an opposing rear panel 106, a top panel 112 and an opposing bottom side or panel 114, and opposing left panels 108 and right panels 110. Each of the panels may have an exterior surface 138 and an interior surface 136, the interior surfaces 136 defining the internal storage volume 130.

The luggage case 100 or shells 118, 120 may include at least one sidewall extending around the periphery of a major face panel. In one example, the at least one sidewall includes two or more sidewalls. The at least one sidewall may define, at least in part, the panels. For example, the shells 118, 120 may each include a short sidewall 152 and a long sidewall 154. The short sidewall 152 and the long sidewall 154 may extend from or intersect at a corner region 160 of the shells 118, 120. In some examples, each luggage shell 118, 120 includes at least two short sidewalls 152 and two long sidewalls 154. In some examples, the luggage case 100 or shells 118, 120 may be a variety of shapes or orientations. Accordingly, reference to a short sidewall 152 or long sidewall 154 may be for identification purposes. In one example, the luggage case 100 may be a carry-on luggage case. In such an example, the long sidewall 154 may be approximately 490 mm. The short sidewall 152 may be 390 mm. The corner region 160 may have an initial or final radius of approximately 40 mm.

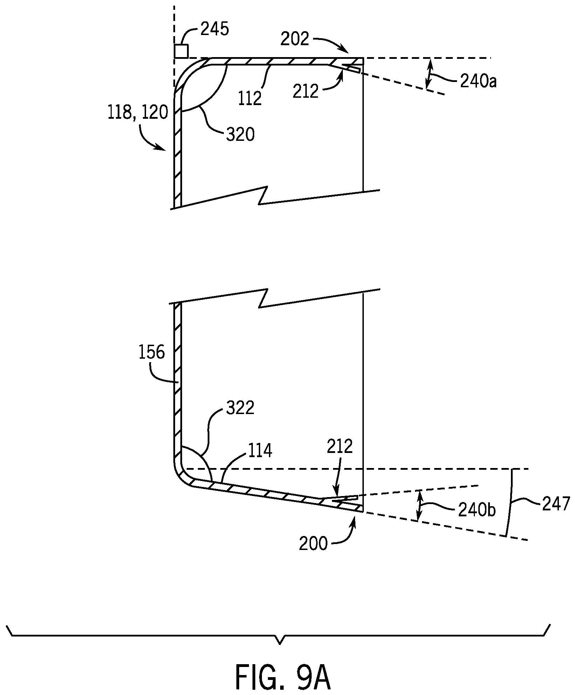

The sidewalls 152, 154 may be positioned around or adjacent a major face or panel 156 of the luggage case 100 or shells 118, 120. In some examples, the major panel 156 may be, or define, the front panel 104 or rear panel 106 of the luggage case 100. As described herein, such as with reference to FIG. 9A, the sidewalls 152, 154 may be oriented at an angle relative to the major face 156. The sidewalls 152, 154 may be oriented at the same angle or a different angle. In some examples, the opposing sidewalls relative to the major face may be formed at the same or different angles. In one example, the top panel 112 may be oriented orthogonally to the major face 156. The bottom panel 114 may extend outwardly relative to the major face 156. For example, the bottom panel 114 may be approximately between 90 and 98 degrees relative to the major face 156. The outward angle of the bottom panel 114 may provide a draft angle sufficient for both the top panel 112 and the bottom panel 114 during moulding.

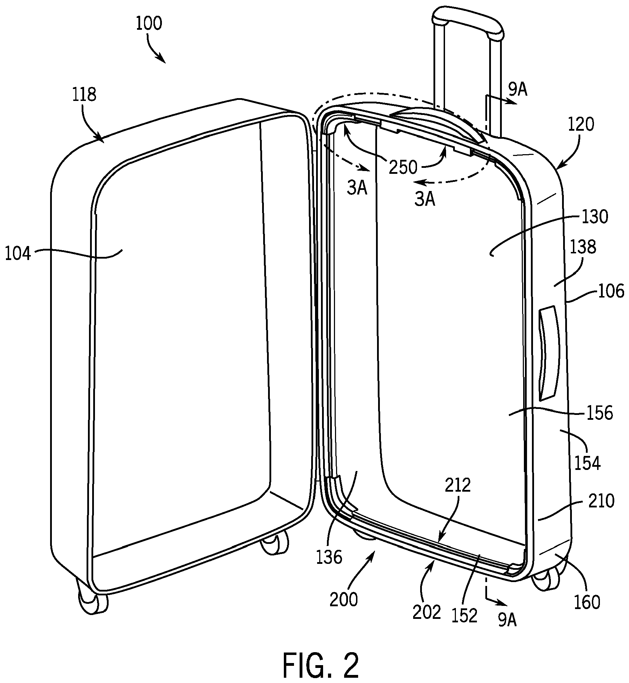

The luggage case 100 can be moved between a closed configuration in which the rim portion 200 of the two or more shells 118, 120 are positioned adjacent one another, and an open configuration to provide access to the internal storage volume 130, which is depicted in FIG. 2. The luggage case 100 may be selectively opened or closed by a closure assembly 144. The closure assembly 144 may be latch or zipper extending along a line of connection 146 between the two or more shells 118, 120. Reference may be made to either the first shell 118 or the second shell 120, but it is appreciated that either shell 118, 120 may include the same or similar structures of features.

Each of the shells 118, 120 may be made integrally formed from a material. For example, the shells 118, 120 may be formed entirely or partially of a moulded polymer. In some examples, the shells 118, 120 may be formed of a polypropylene or polypropylene blend, polycarbonate, ABS polymers, glass filled or glass blended materials, or various combinations thereof. Either or both shells 118, 120 may be formed as a single unit with at least some features of the shells 118, 120, integrally moulded with the shell 118, 120. For example, the rim portion 200 may be integrally moulded with the shells 118, 120. In some examples, a portion of a luggage case 100 may be made by injection moulding all or part of each shell 118, 120 and connecting additional or exterior portions to the exterior of the shells.

In some examples, the luggage article 100 may include one or more carry handles 128 and/or a retractable tow handle 126. The tow handle 126 may be attached to or extendable from the rear panel 106 of the luggage article 100, such as at a bezel or recess. The carry handles 128 may be defined by or attached to the luggage article 100. The luggage article 100 includes one or more foot elements 140. The foot elements 140 may be wheels, casters, spinner assemblies, posts, or a combination to support the article 100 on a support surface, or enable the movement of the luggage article 100 on a support surface, such as a floor, street, sidewalk, or the ground. In one example, the wheels 140 may be coupled to the shells 118, 120 along the bottom side or panel 114. In some examples, the wheels 140 may be connected at a corner region 160 of the shell 118, 120.

Referring to FIGS. 2-4B, the luggage case 100 includes a rim portion 200. The rim portion 200 is defined along the peripheral edge, or periphery, of the either or both of the shells 118, 120. The rim portion 200 may be continuous or discontinuous along the shells 118, 120. The rim portion 200 includes an outer or peripheral rim 202 and an inner or secondary rim 212.

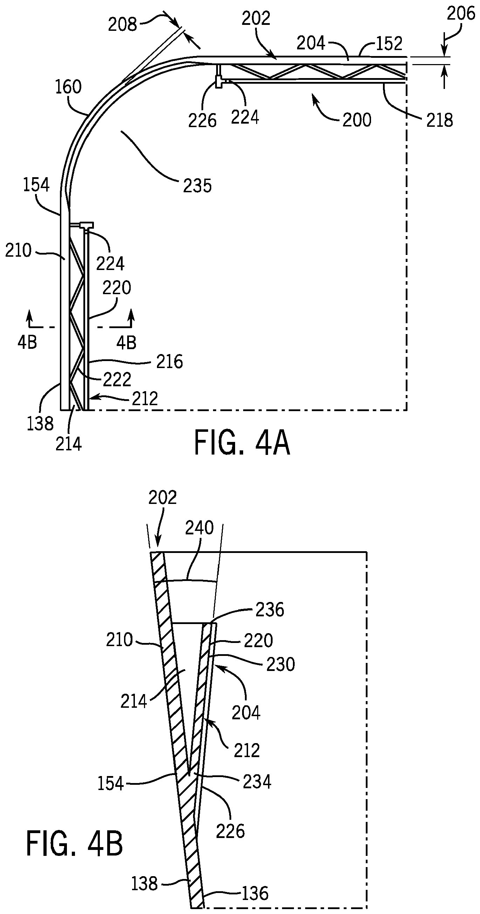

The inner rim 212 extends inwardly from the interior surface 136 of the luggage shells 118, 120. The inner rim 212 may extend along the short sidewalls 152, the long sidewalls 154, the corners 160, or the like. Accordingly, the inner rim 212 may be spaced inward or positioned interior from the outer rim 202. The inner rim 212 may be defined by a flange 230 having opposing inside and outside edges 234, 236. The inside edge 234 is engaged with the sidewall 152, 154 (where the inner rim 212 is present). With reference to at least FIG. 4B, the outside edge 236 forms a free edge distal from the inside edge 234, and positioned away from the sidewalls 152, 154 as the flange 23o is angled away from the sidewall 152, 154. At least a portion of the inner rim 212 may be positioned further inwardly than the sidewalls 152, 154 into the storage volume 130. In one example, the free edge 236 is positioned further inwardly than the sidewalls 152, 154 into the storage volume 130. The free edge 236 may be, in some examples, deflected while being removed from the mold, as is described further below. The inner rim 212 may extend along all of or a portion of the outer rim 202. As discussed herein, the inner rim 212 may be integrally moulded to or with the shell 118, 120.

In some examples, the exterior surface 138 of the rim portion 200 optionally defines a featureless flat rim band 210. For example, the outer rim 202 may be flush with the sidewalls 152, 154. The rim band 210 may be defined on an exterior surface of at least one sidewall 152, 154 and adjacent the peripheral rim 202. In one example, the rim band 210 is not raised relative to the exterior surface 138. In another example, the rim band 210 is flush with the field region.

Optionally, the exterior surface 138 of the rim portion 200 defines or includes a raised ridge or shoulder. The shoulder may be located adjacent the inner rim 212. In some examples, the shoulder may provide spacing between the peripheral rim 202 and the inner rim 212, such as by 1 to 5 mm from the inner rim 212 at an intersection between the inner rim 212 and the peripheral rim 202. In some examples, the indentation or step feature may assist to conceal or reduce the noticeability of marks from forming the rim portion 200, such as during moulding.

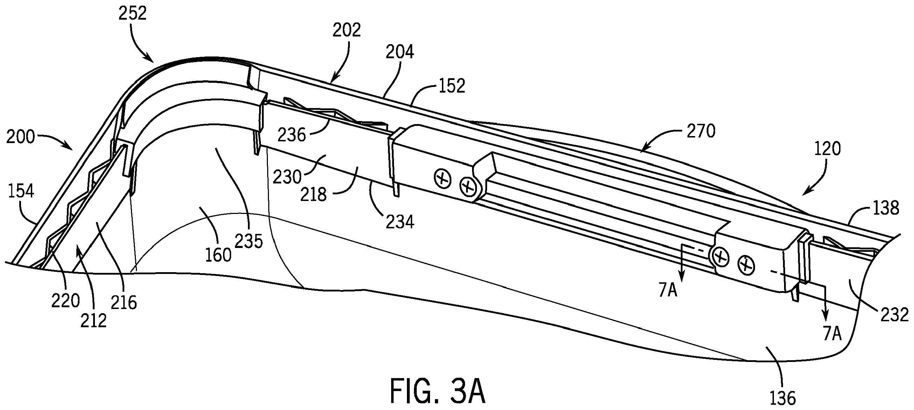

Referring to Figs. 2 and 3A, where the inner rim 212 is discontinuous, an insert 250 may optionally be coupled to the inner rim 212 to support the shell 120, such as along the gap 235. The inserts 250 may be coupled, at least in part, to the inner rim 212 or luggage shells 118, 120, and support the rim portion 200 along the gap 235. The inserts 250 may be a rim insert 252 to support a section of the rim portion 200, such as at the corner regions 160 or along a side panel 152, 154. The insert 250 may be a handle insert 270 in order to allow the attachment of or defining a carry handle 274 on an exterior 138 of the luggage shell 120.

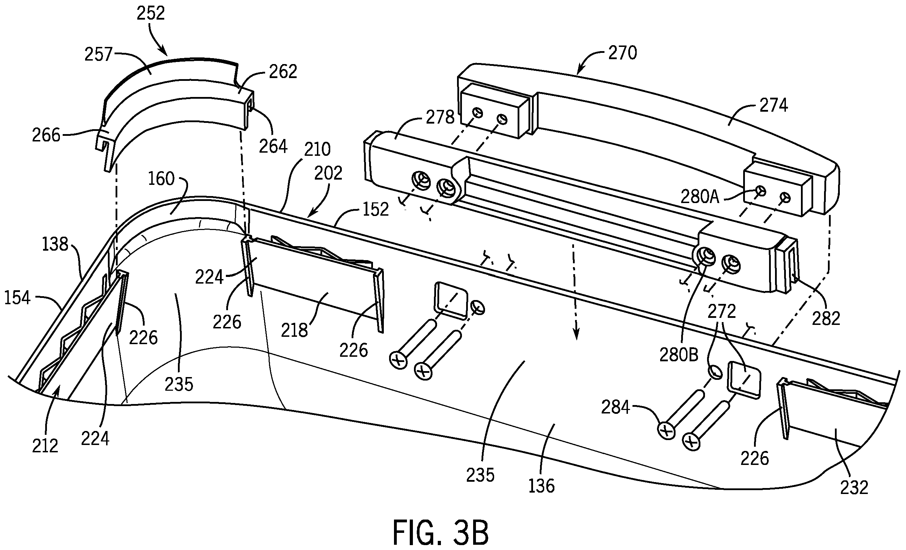

FIG. 3A shows a close up view of the luggage shell 120 of FIG. 2. FIG. 3B shows an exploded assembly view of the luggage shell 120 depicted in FIG. 3A. With continued reference to FIGS. 3A and 3B, and reference to FIGS. 4A and 4B, the luggage shell 120 includes the rim portion 200, including an outer rim 202 and an inner rim 212.

As discussed herein, the rim portion 200 may be defined at or along the periphery of the shells 118, 120. Both the outer rim 202 and the inner rim 212 may be integrally formed or moulded with the shells 118, 120.

The outer rim 202 may define the peripheral edge or perimeter of the luggage shells 118 or 120. The outer rim 202 may be defined in part by the sidewalls 152, 154. The outer rim 202 may include an outer peripheral edge 204. The outer peripheral edge 204 may denote the boundary or intersection between the interior surface 136 and the exterior surface 138 of the shell 120. The outer rim 202 may extend in the same or similar direction as the sidewalls. In some examples, the outer rim 202 or sidewalls 152,154 may be positioned orthogonal (e.g. at a substantially right angle) to or at an angle, such as a draft angle, relative to the major face panel 156 to assist in removal from a mould. For example, the outer rim 202 or sidewalls 152,154 may be positioned at approximately between 0 and 8 degrees relative to orthogonal with the major face 156. In some examples, the outer rim 202 may extend between approximately 2 and 6 cm from an intersection with the inner rim 212 to the peripheral edge 204. In one example, the outer rim extends approximately 4 cm.

The outer rim 202 may have a rim thickness dimension 206 along a portion of the short sidewall 152 or long sidewall 154. The rim thickness 206 may be the same at the outer peripheral edge 204 as along the sidewalls 152, 154, or panels of the shells 120. In some examples, the outer rim 202 may have a second, corner thickness 208 at or along the corner region 160. The corner thickness 208 may be less than the rim thickness 206. The reduced corner thickness 208 may be only adjacent the outer peripheral edge 204 or between the outer peripheral edge 204 and the major face 156. The reduced corner thickness 208 may be a depression in the interior surface 136 of the corner region 160. As discussed herein, the reduced corner thickness 208 may allow the corner region 160 of the shell 120 to deflect or flex during moulding to release mould components from the shell 120 after moulding.

The inner rim 212 may be a ledge or collar extending from the sidewalls 152, 154. For example, the inner rim 212 may be a solid feature extending inwardly from the sidewalls 152, 154. In some examples, the inner rim 212 may extend linearly from the sidewalls 152, 154. The inner rim 212 may extend to an inner peripheral edge 220. The inner rim 212 may extend inwardly from or relative to the sidewalls 152, 154 or one or more the corner portions 160. The inner peripheral edge 220 may be positioned below the outer peripheral edge 204 to prevent interference between inner rims 212 of the two shells 118, 120 in a closed configuration. A gap or channel 214 may be defined between the outer rim 202 and the inner rim 212.

The inner rim 212 may extend at a rim angle 240 relative to the sidewalls 152, 152 or corner region 160 from which it extends. The rim angle 240 may be an acute or non-orthogonal angle relative to the sidewalls 152, 154, such as with reference to the sidewalls 152, 154 or outer rim 202. The rim angle 240 may be between 1 and 14 degrees relative to the sidewalls 152, 154 or outer rim 202. In one example, the rim angle 240 may be approximately in the range of 4 to 6 degrees, inclusive. In another example, the rim angle 240 may be approximately 6 degrees. The inner rim 212 may extend for a length between 0.5 and 4 cm from the sidewall to the inner peripheral edge 220. In one example, the inner rim 212 may extend inwardly approximately 2.5 cm relative to the sidewalls 152, 154. In some examples, the rim angle 240 may be an angle relative to the major face 156 of the luggage case 100. For example, the inner rim 212 may extend inwardly approximately between 1 and 14 degrees relative to an orthogonal direction with the major face 156. Due to the draft angle of the sidewalls 152 or 154, the inner rim 212 may be between approximately 80 and 94 degrees relative to the major face 156. Because the rim angle 240 is inward relative to the sidewalls 152,154, the rim angle 240 may be referred to as a negative draft angle 240.

The rim portion 200 may include one or more support features or trusses 222 extending between the outer rim 202, or inner surface 136, and the inner rim 212. The trusses 222 may be positioned in the channel 214. The support features 222 extend non-orthogonally between the outer rim 202 and the inner rim 212. For example, the support features 222 may extend at acute or obtuse angles between the inner surface 136 and the inner rim 212. In some examples, the support features 222 may have a triangular, honeycomb, or zigzag pattern. The support features 222 may be integrally formed with the shells 118, 120, or the rim portion 200. In alternative examples, the support features 222 may be coupled to the rim portion 200. The support features 222 may be oriented vertically relative to the major face. The support features 222 may provide structural support or rigidity to the rim portion 200 to increase or improve the durability of the shells 118, 120.

The inner rim 212 may extend continuously along a portion of the interior 136 of the shell 120. In some examples, the inner rim 212 may extend discontinuously, such as in segments. In examples where the inner rim 212 is discontinuous, the inner rim 212 may include a first portion 216 spaced apart from a second portion 218. For example, where the inner rim 212 extends discontinuously along the outer rim 202, portions of the inner rim 212 may include or terminate in one or more lateral ends 224. The first portion 216 and the second portion 218 may define a gap 235. Each lateral end 224 may define an attachment portion 226 to couple with or engage a portion of an insert 250 that spans the gap 235 between the lateral ends 224. The attachment portion 226 may include flanges 228 forming a T-shape.

In one example, the first portion 216 extends along a portion of the long sidewall 154 and the second portion 218 extends along a portion of the short sidewall 152. The gap 235 may be defined at the corner region 160. Accordingly, the inner rim 212 may be positioned adjacent to, and not extend through, the corner region 160.

In some examples, the inner rim 212 includes a third portion 232. The second 218 and the third 232 portions may be positioned along a portion of the same sidewall, such as the short sidewall 152 and define another gap 235 there between. The ends of each of the second 218 and third portions 232 may each define the attachment portions 226.

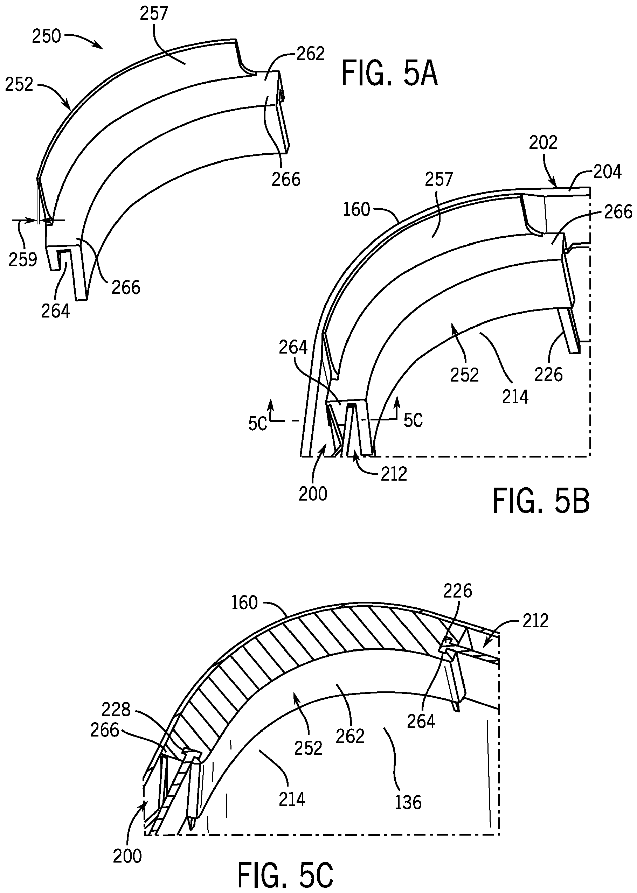

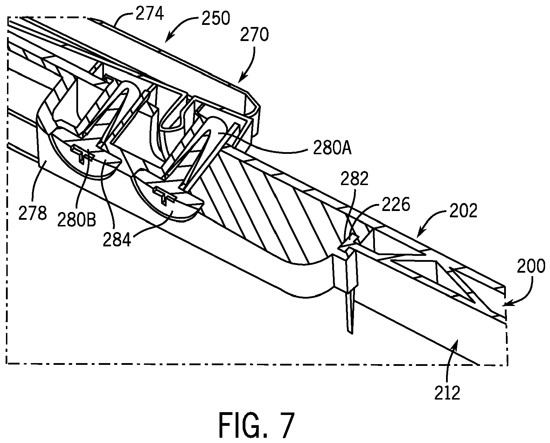

With continued reference to FIGS. 3A and 3B, and additional reference to FIGS. 5A to 7, the luggage shell 120 may include one or more inserts 250 that are positioned in the gaps 235 of the inner rim 212. The inserts 250 may be selectively coupled to the interior of the luggage shells 118, 120. For example, the inserts 250 may be coupled, at least in part, to the inner rim 212. In some examples, the inserts 250 may be curved or angled to form corner inserts 252 to fit into gaps 235 formed in corner regions 160 (as depicted in FIG. 5A to FIG. 6, in addition to FIGS. 3A and 3B). The inserts 250 may include particular attachment features to act as carry handle inserts 270 as depicted in FIG. 7, in addition to FIGS. 3A and 3B.

The inserts 250 may include a rigid, semi-rigid, or flexible material. The corner insert 252 may be used where the material of the luggage shells 118, 120 are polycarbonate, ABS polymers, or glass filled or glass blended materials. The carry handle 270, or inserts 250 generally, may be selectively attached or removed from the luggage case 100 to add, remove, or select colors of the features of the luggage case 100.

The corner insert 252 may include an insert rim 257 defining a thinner and upper portion of the corner insert 252. The insert rim 257 may be a fin or flange. The insert rim 257 may have an insert thickness 259. The corner insert 252 may include a shelf portion 262 (e.g. a shoulder). The shelf portion 262 may be a main body of the corner insert 252. The shelf portion 262 may define reception channels 264 in a bottom or side of the shelf portion 262 opposite the insert rim 257. The reception channels 264 may be defined at insert ends 266 of the shelf portion 262. The shelf portion 262 may include two spaced apart insert ends 266.

FIG. 5B and FIG. 3A depict an example corner insert 252 coupled to the shell 120. In one example, the corner insert 252 is coupled to a first portion 216 and a second portion 218 of the inner rim 212 and is positioned in the gap 235 formed at the corner region 160. For example, extend from a lateral end 224 of the first portion 216 to a lateral end 224 of the second portion 218.

The corner insert 252 is attached to the portions of the inner rim 212 by the attachment portion 226 being received in the reception channels 264. As shown in FIG. 5C, when the T-shaped attachment portion 226 is received in the corresponding T-shaped reception channels, the flanges 228 may be retained by the reception channel 264. Correspondingly, the attachment portions 226 couple the corner insert 252 to the inner rim 212.

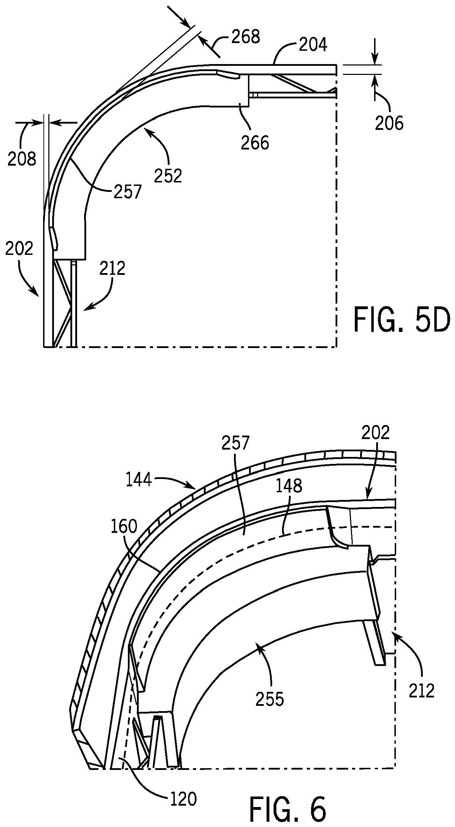

When the corner insert 252 is coupled to the inner rim 212, the corner insert 252 may be in contact with the inner surface 136 of the corner region 160. The shelf portion 262 may provide structural support or rigidity to the shell 120, such as at the corner region 160. The insert rim 257 may extend along the interior surface 136 of the corner region 160 to at or adjacent the outer peripheral edge 204. The combined thickness 268 of the insert thickness 259, shown in FIG. 5D, of the insert rim 257 and the corner thickness 208 at the corner region 160 may be similar or equal to the outer rim thickness 206 adjacent the corner region 160. The combined thickness 268 of the insert rim 257 and the outer peripheral edge 204 at the corner region 160 may result in a stronger or more durable corner region 160 of the shell 120.

With reference to FIG. 6, the inserts 250 may be secured to the shell 120 by stitching 148. In one example, a portion of the closure assembly 144, such as a zipper tape, may be stitched to the shell 120 together with the corner insert 252. The closure assembly 144 may be stitched to the interior 136 or exterior 138 of the shell 120. The thin structure of the insert rim 257 may allow a stitching device to pierce the corner insert 252 while also providing support to the rim portion 160.

With reference to FIGS. 3A and 3B and FIG. 7, the insert 250 may be a carry handle insert 270. The carry handle insert 270 may include a handle feature be positionable on an exterior of the luggage shell 120. The carry handle insert 270 may include an anchor portion 278 for use in attaching a handle portion 274 through the luggage sidewall 152, 154. The anchor portion 278 or carry handle insert 270 may couple to the shell 120, such as at the inner rim 212.

The handle portion 274 may be a handle, hook, or other feature for a traveler to grip. The handle portion 274 may define one or more apertures 280a. The apertures 280a may be positioned and shaped to receive a fastener, such as counter sunk or threaded. In one example, at least two apertures 280a are defined at opposing ends of the handle portion 274 to receive fasteners to attach to the handle portion 274.

The anchor portion 278 may be a feature to engage or connect to the shell 120 and the handle portion 274. The anchor portion 278 may be a bracing feature for strengthening the rim 202 in the absence of the inner rim 212. For example, the anchor portion 278 may reinforce the rim portion 200 and support the "point" load created when the luggage case is carried by the carry handle 274. The anchor portion 278 may be shaped to match a profile of the interior of the luggage shell 120 or case 100.

The anchor portion 278 may define reception channels 282 at opposing ends. The reception channels 282 may be the same as or similar to the T-shaped reception channels 264. Accordingly, the reception channels 282 may be an aperture having a corresponding shape, such as a T-shape, to the attachment portion 226 or the flanges 228.

In examples where the shell 120 includes a carry handle insert 270, the inner rim 212 may be discontinuous or mostly continuous and define a portion to receive the carry handle insert 270. For example, the inner rim 212 may define a gap 235 between two portions of the inner rim 212. For example, the second portion 218 and the third portion 232. The anchor portion 278 may be coupled with the handle portion 274. In some examples, the shell 120 defines one or more shell apertures 272 correspondingly spaced to the apertures 280a. The fasteners may couple the insert 270 to the shell 120, or the anchor portion 278 may couple to the inner rim 212.

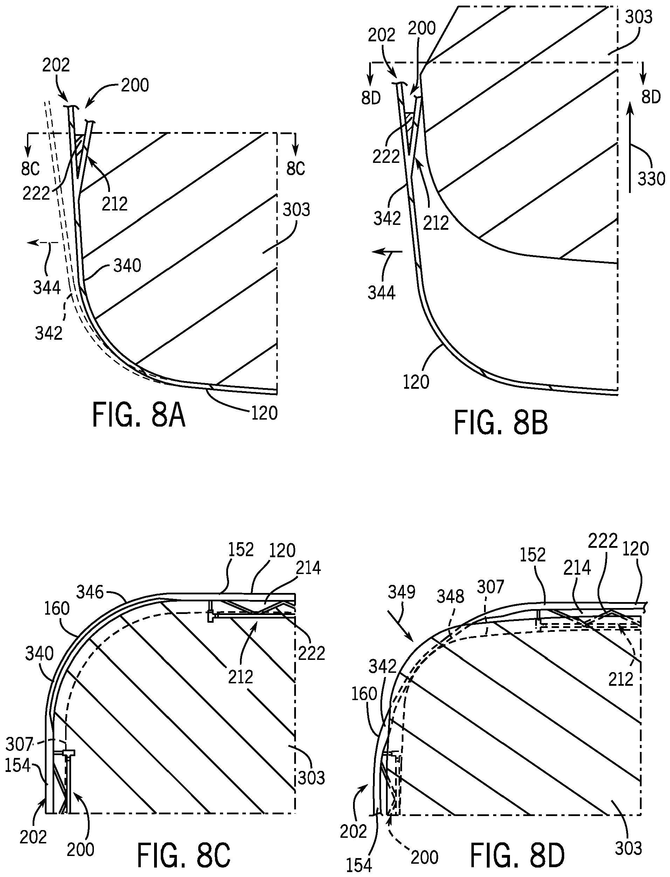

Turning to FIG. 8A and 8B, an example illustration of forming the integrally moulded shell 120 is depicted.

For portions of the shell 120 to flex, deflect, or stretch during separation of the mould core 303, the shell 120 may be formed from a polypropylene or polypropylene blend material. Polypropylene materials may have beneficial melt flow characteristics that assist in forming the shell by injection moulding. Polypropylene materials may be resilient in colder or cool temperatures after forming the luggage case 100. Polypropylene materials may also be resistant to visible or permanent deformation during flexing, deflection, or stretching, such as whitening. The material or materials may also include or be ABS, polycarbonate, or glass filled or glass blended materials.

As shown in FIG. 9A, the mould core 303 and outer mould 315 may be a portion of a mould assembly 300. When closed together mould core 303 and outer mould 315 may define a mould cavity 301 (with reference to the description of FIGSs. 9A, 9B) into which the material is injected to create the shell 120 by injection moulding. To insert or remove a mould core 303 from the outer mould 315, the mould core and/or outer mould 315 generally moves relative to one another along a single axis or direction. For example, the mould core 303 may only be moved in direction 330. The mould core 303 may define the interior features of the luggage shell 120. For example, the mould core 303 may have a surface corresponding the shape of the interior 136 of the shell 120. The outer mould 315 may define the exterior features of the luggage shell 120. In some examples, the rim portion 200 is defined, at least in part, by the mould core 303 and the outer mould 315. In some examples, the outer mould 315 may be separated from the luggage shell 120 prior to separating the mould core 303 from the luggage shell 120.

Commonly, to release a moulded article from a mould core, the mould core and moulded piece are often shaped to limit or reduce contact to prevent the mould core from damaging the moulded component. To accomplish this, a moulded component and a mould core are commonly defined with a draft angle, or tapered shape, such that as a mould core 303 moves in the direction of separation 330 (also, separation direction), space is formed between the moulded component and the mould core that increases as the mould core is removed. Further, inwardly oriented features often require a separate mould component, like sliders, that move transverse to the direction of separation 330. However, these transverse moving components add complication and expense, and may create surface features or other visible defects that are not aesthetically pleasing to a traveler.

Referring to FIGs. 8A to 8D, to allow for the formation of an inner rim 212 extending inwardly from the interior 136 of the shell 120, one or more portions of the shell 120 are designed to deflect or flex during separation from the mould core 303, thus not requiring the use of transverse moving components, such as sliders. As the mould core 303 is moved in the direction of separation 330, the mould core 303 may contact the angled surface of the inner rim 212, which may elastically deflect outwardly, such as in direction 344. In some examples, a region of the shell 120, such as the sidewalls 152, 154 deflect outwardly to accommodate the removal of the mould core 303 to the deflected position 342, which may be deflecting together with the inner rim 212. In some examples, the inner rim 212 deflects outwardly (e.g. moves towards the outer rim 202) with the sidewalls 152, 154 being less deflected. In some examples, the rim angle 240 between the inner rim 212 and the outer rim 202 may decrease during separation of the mould core 303 from the shell 120. Because the inner rim 212 may be formed at an inward angle (e.g. at a negative draft angle) and may cause the resilient deflection of the sidewalls 152, 154 and/or the inner rim 212, a mould without sliders may be used. Alternatively or additionally, the formation of structural features on the exterior of the luggage shell 120 near the rim portion 200, such as shoulders, is reduced or eliminated. Alternatively or additionally, the aesthetic defects in the formed luggage shell 120 are also reduced.

Turning to FIGS. 8C and 8D, cross sectional views of the example mould core 303 being separated from the shell 120 are depicted. FIGS. 8C and 8D depict deflection or flexing of the corner region 160 for separation of the mould core 303 and luggage shell 120. In some examples, the deflection may be accomplished by defining a corner region 160 without an inner rim 212 and/or with a thinner corner thickness 208. For example, the corner region 160 may move inward and the sidewalls 152, 154 flex outward, which allows the mould core 303 to pass the inner rim 212 and separate from the shell 120.

FIG. 8C shows a top view of the mould core 303 in the formed luggage shell 120. The cross section indicated by line 8C-8C in FIG. 8A, is taken at a depth intersecting the rim portion 200, including the outer rim 202 and the inner rim 212. A portion 307 of the mould core 303 below the section line 8C-8C is indicated by the dashed line. The lower portion 307 illustrates the draft angle or tapering (e.g. differing width at different heights) of the mould core 303. The lower portion 307 may be a bottom, middle, or other region of the mould core 303.

At the corner region 160, the outer rim 202 may define a first radius of curvature 346 in the initial position 340. The first radius of curvature 346 may correspond to the radius of the corner 160 after or before separation from the mould core 303 (e.g. after forming the luggage shell 120).

FIG. 8D depicts a cross section of the mould core 303 and the shell 120 during removal, such as in direction 330 as depicted in FIG. 8B. During removal, as discussed herein, the mould core 303 may contact the inner rim 212 and deflect the sidewalls 152, 154 outwardly, such as in direction 344. In some examples, for the sidewalls 152, 154 to flex outwardly, the corner region 160 of the shell 120 may deflect or flex elastically inward, such as in direction 349. For example, the radius of the corner 160 increases from the first radius 346 to a second radius of curvature 348 as the outer edge 204 moves inward at the corner region 160. To increase the radius of curvature, the lower portion 307 may contact the inner rim 212 and the corner region 160 may be forced inward to contact the lower portion 307. By enabling flexing or deflection of the corner region 160, the inwardly extending inner rim 212 may be formed to reinforce the rim 200 without use of a transverse mould component (e.g. slider).

In some examples during separation of the shell 120 and the mould core 303, the materials of the shell 120 may allow deflection while resisting stretching or deformation (e.g. a permanent or substantial change in dimensions such as the width, thickness, or length of the portion of the shell 120). For example, the corner region 160 may deflect inwardly without stretching. In examples where the corner region 160 only deflects, the material of the shell 120 may be a relatively hard or durable material. In some examples, the supports 222 may assist in preventing stretching of portions of the shell 120 along which the inner rim 212 is present.

In some examples, when the inner rim 212 deflects towards the outer rim 202, which causes the supports or trusses 222 to resiliently deflect or resiliently deform also. As a result, the width of the channel 214 may be decreased to assist in separating the shell 120 from the mould core 303. By positioning the supports or trusses 222 at a non-orthogonal position relative to the inner rim 212 and outer rim 202, the support features 222 may support the inner rim 212 while also accommodating elastic deflection.

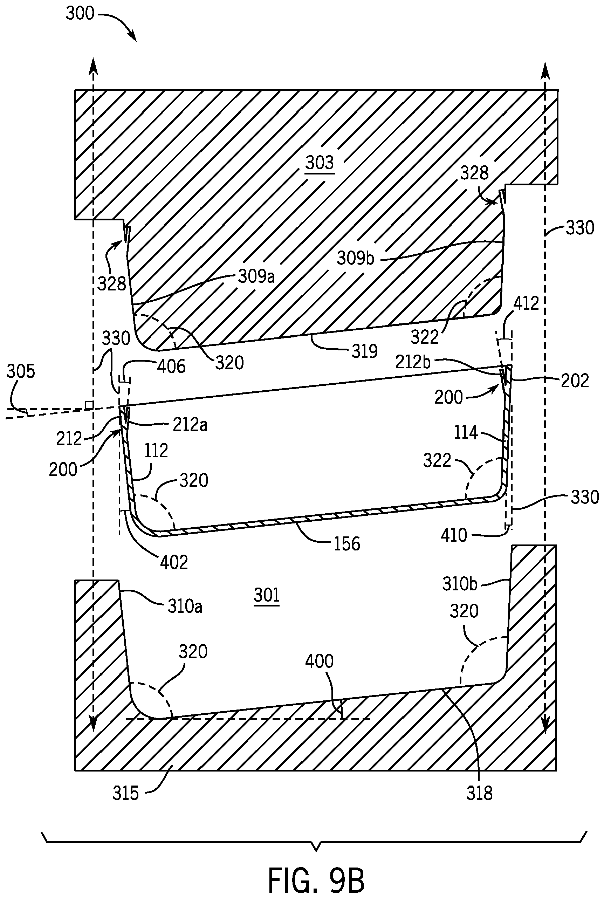

Turning to FIG. 9A and 9B, an example mould assembly 300 for forming an example luggage shell 118, 120 is depicted.

With reference to FIG. 9A, luggage case 100 includes the sidewalls 152, 154 (see FIG. 2) may extend from the major face wall 156 as defined by the mould cavity 301. The sidewalls 152 or 154 may be the top sidewall 112 or the bottom sidewall 114. In some examples, the angle between the sidewalls 112 and 114 may approximately orthogonal, or outwardly oriented, relative to the major face 156. In one example, the angles are between approximately 90 to 98 degrees relative to the major face 156.

In one example, such as that shown in Fig. 9A and 9B, the luggage shell 118, 120 is designed to have a side, such as the top panel 112, extend at an angle 320 of approximately 90 degrees, or orthogonal, to the major face wall 156. The opposing side, such as the bottom panel 114, may extend at an angle 247 outward from a line normal or orthogonal relative to the major face 156. Angle 247 may be approximately 8 degrees. Angle 322 between the major face 156 and the bottom panel 114 encompasses the right angle and angle 247, and is approximately 98 degrees. For example, the bottom panel 114 may extend at an angle 322 of approximately 98 degrees outwardly relative to the major face wall 156.

With reference to FIG. 9B, typically a mould cavity has a vertical orientation and is "square" to the mould separation direction 330. The mould separation direction 330 is the direction of the relative movement between the mould core 303 and outer mould 315 when separated to remove the moulded article. The offset angle 305 of the mould cavity 301 in the examples here is relative to the mould separation direction 330. Commonly, draft angles may be defined relative to the direction of separation 330, to reduce, minimize or prevent interference between mould components or the moulded part. Draft angles may be between 1 and 5 degrees, though alternative draft angles greater than or less than the range are possible. For reference purposes, in one example a draft angle may be 4 degrees. Because of the draft angles that may be required by moulds, features that are parallel with or inwardly angled (e.g. have a negative draft angle) relative to the direction of mould movement 330 are often difficult to remove from the mould without damaging the features. For example, during separation of the mould assemblies and the release of the moulded part, the mould core or outer mould may contact features of the moulded part and cause damage to the part.

The mould assembly 300 includes the mould core 303, or a male mould, and a female mould, or outer mould 315. The mould core 303 and the outer mould 315 may define the mould cavity 301 there between, into which the luggage shell material is injected to form the luggage shell 118, 120. The mould cavity 301 may correspond to the shape and features of the luggage shell 118, 120. For example, the mould cavity 301 may define the sidewalls and rim portion 200 of the shells 118, 120 upon injection of the mould material.

In the assembled configuration, the walls 309a, 309b and bottom wall 319 of the mould core 303 and walls 310a, 310b and bottom wall 318 of the outer mould 315 may be aligned and spaced apart (e.g. not in contact or interference) to define at least a portion of the mould cavity 301. The walls 309a, 310a of the mould core 303 and the outer mould 315 may define the orientation of the top wall 112 relative to the major face 156 by angle 320. The angle 320 may be approximately orthogonal or a right angle. The walls 309b, 310b of the mould core 303 and the outer mould 315 may define the orientation of the bottom wall 114 relative to the maj or face 156 by angle 322. The angle 322 may be greater than an orthogonal angle. For example, between 0 and 8 degrees greater than orthogonal. Accordingly, the angle 322 may be approximately between 90 and 98 degrees.

In a typical mould assembly with a vertical alignment of the mould cavity, the angle 320 of 90 degrees between the top panel 112 and the major face wall 156 would not likely be feasible because there is not a sufficient draft angle to allow for the release of the moulded part from the mould assembly. Additionally, because the inner rim 212 is angled toward the internal storage volume 130 of the luggage shell 120 relative to the sidewalls, it may create a negative draft angle. This results in the inner rim 212 being engaged by the mould core 303 upon release of the shell 118, 120 from the outer mould 315. In some examples, the inner rim 212 may be angled to a parallel direction, or extend transverse relative to the direction of removal 330, but inwardly relative to the orientation of the sidewalls 112, 114 or the outer rim 202. For example, the inner rim 212 may extend at an angle towards, or to intersect, a direction of separation 330 of the mould core 303 and the outer mould 315.

The walls 309a and 309b may include cavity features 328 to define the inner rim 212. The walls 309a, 309b may continue around the entire outer mould 315 and the mould core 303 to define the short and long sidewalls 152, 154 of the shell 118, 120. The cavity features 328 are located on the mould core where the inner rim 212 is desired to be positioned to extend along the luggage shell 118, 120, as referenced herein. The cavity features 328 are configured to form the inner rim 212. In some examples, the inner rim 212 may be defined on the short and long sidewalls 152, 154.

The mould cavity 301 may oriented at an offset angle 305 in the mould assembly 300 relative to the direction of separation 330. The oriented angle 305 may facilitate the separation of the shell 118, 120 from the core 303 by deflecting the inner rim 212 and outer rim 202 outwardly during separation. The offset angle 305 of the mould cavity 301 may be approximately 4 degrees below horizontal, and approximately 94 degrees with respect to the mould removal or separation direction 330. The major face 156 forms an angle 400 relative to horizontal of 4 degrees, and approximately 94 degrees from the mould separation direction 330.

The offset angle 305 results in a draft angle 402 of the top panel 112 of approximately 4 degrees. The draft angle 402 is determined by the summation of the angle 320 and the offset angle 305. Draft angles are measured with respect to the mould separation direction 330. The draft angle 406 of the inner rim 212a (on the top panel 112) is negative, and is approximately negative 4 degrees. The bottom panel 114 portion of the mould cavity 301 has a draft angle 410 of approximately 4 degrees. The bottom panel 114 draft angle 410 comes from the difference between the offset angle 305 and the mould cavity angle 322. Accordingly, the draft angle 402 for the top wall 112 is defined provided by angle 322 being greater than the draft angle 410 by offsetting the mould cavity on angle 305. In one example, and for reference purposes, the draft angle 414 of the inner rim 212b is negative, and may be approximately negative 4 degrees relative to perpendicular with the major face 156. The offset angles and draft angles provided for the example in FIG. 9B may vary such as depending on the size of the luggage case, materials used, or intended aesthetics of the luggage case. For example, the offset angle 305 may be approximately half the angle 322 for symmetrical draft angles at opposing sides or walls. In some examples, the offset angle 305 is equal to an intended draft angle 402 for an orthogonally oriented wall after moulding.

As shown in FIG. 9B, by setting the mould cavity 301 in the mould assembly 300 at an offset angle, the issues of negative draft angles are mitigated. The top panel 112 is oriented relative to the mould separation direction 330 to have a sufficient draft angle to allow for separation of the luggage shell 118, 120 from the mould core 303. The draft angle 402 for the top panel 112 comes from the increased or greater draft angle of the bottom panel 114 defined by angle 322. The draft angle 402 for the top panel 112 assists in separation or the reduction of the contact between the top wall 112 and the mould core 303 during separation.

Additionally or alternatively, the negative draft angle 240 of the inner rim 212 is sufficiently reduced to allow the mould core 303 to release from the shell 118, 120 by deflecting the inner rim 212, and/or the outer rim 202, outwardly. The undercut feature formed by the inner rim 212 is sufficiently gradual to slide by and not catch on the mould core 303 as it moves past the inner rim 212. For example, the inner rim 212 may form an angled cam surface in the direction of relative movement 330 to allow for the gradual deflection of the inner rim 212 and/or outer rim 202 outwardly in response to sliding contact with the mould core 303. In some examples, the offset angle 305 may orient the inner rim 212 to be closer to or in parallel with the direction of mould movement 325, and thereby have less of a negative draft angle to overcome upon release from the mould assembly.

Accordingly, the shell 118, 120 features are configured to be spaced from or deflect under contact with the mould components 300 upon release and avoid undesired damage caused by the contact with the mould core 303. This in turn allows the luggage shell 118, 120 to be injection moulded in a mould assembly 300 more efficiently, and with less expense because the mould assembly may not require complicated moving components, such as sliders, which increase the expense, maintenance costs, and complexity of the moulding operation.

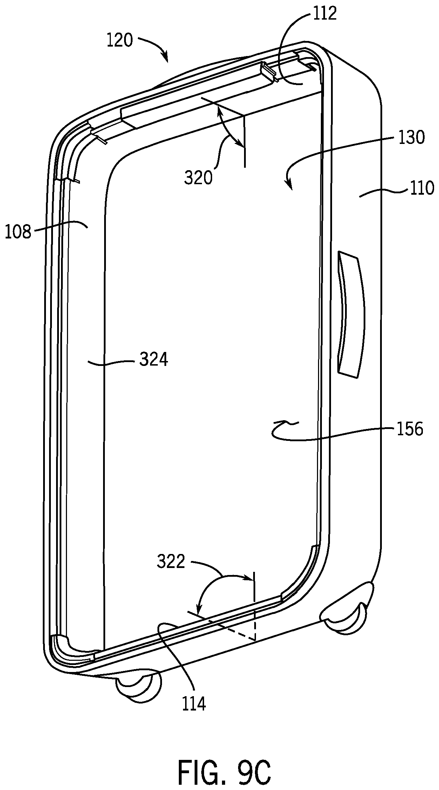

Referring to FIG. 9C, an example of the rear luggage shell 120 is shown, the same as or similar to that shown in FIG. 2, with the wheels, carry handles, and pull handle removed for clarity. The storage volume 130 of the luggage shell 120 is depicted, with top wall 112, opposing sidewalls 108, 110, and bottom wall 114 attached to and extending away from the major face panel 156. As described herein, and for example, the angle 320 between the top wall 112 and the major face panel 156 may be approximately 90 degrees. In one example the draft angle of the top wall in the mould may be approximately 4 degrees. The angle 322 between the bottom wall 114 and the major face panel 156 may be approximately 98 degrees. In one example the draft angle of the bottom wall in the mould may be approximately 8 degrees. This draft angle is approximately twice the typical draft angle of 4 degrees for a similar sidewall structure in luggage case. The angle 324 between opposing sidewalls 108, 110 and the major face panel 156, respectively, may each be approximately 94 degrees. In one example, the draft angle of each of these walls may be approximately 4 degrees.

Referring still to FIG. 9C, in this example the inner rim 212 of the luggage case 100 is continuous through at least one corner regions, and as shown extends through all four corner regions of the shell. In some examples, such as that shown, the inner rim 212 extends around a majority of the length of the peripheral rim 202 of the shell 120, and may extend around the entirety of the length of the peripheral rim 202 of the shell 120.

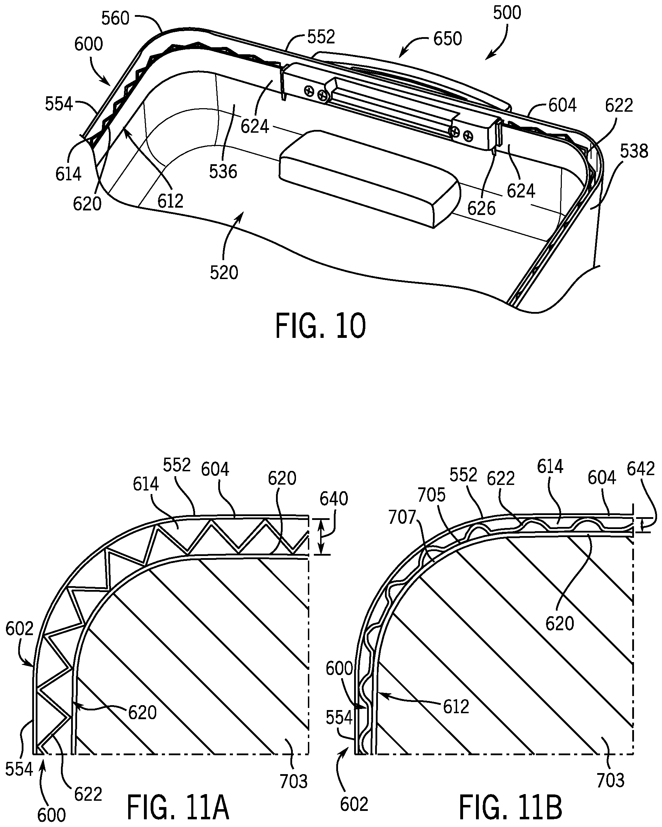

Turning to FIGS. 10, 11A, and 11B, an example luggage case 500 is depicted showing the inner rim 612 extending continuously through at least one or more corner regions 560. The luggage case 500 may be similar to the luggage case 100 previously described with respect to FIGs. 1-9B, with the primary difference being that the inner rim 612 extends through at least one corner region 560. For example, the luggage case 500 may include two or more shells 520. The shells 520 may include sidewalls, such as a short sidewall 552 and a long sidewall 554. The sidewalls 552 and 554 may intersect or transition at a corner region 160. The luggage shell 520 may have an interior surface 536 and an exterior surface 538.

The luggage case 500 includes a rim portion 600. The rim portion 600 may be similar to the rim portion 200 and includes an outer rim 602 and an inner rim 612. The outer rim 602 may define an outer peripheral edge 604. The inner rim 612 may extend inward from the interior surface 536 of the sidewalls 652, 654 to an inner peripheral edge 620. Accordingly, the inner rim 612 may be spaced from the outer rim 602. For example, a channel 614 may be defined between the inner rim 612 and the outer rim 602. The rim portion 600 may include support features or trusses 622. The supports or trusses 622 may extend between the inner rim 612 and the outer rim 602, such as in the channel 614. The supports 622 may be oriented at a non-orthogonal angle between the inner rim 612 and the outer rim 602. The inner rim 612 and the trusses 622 may support or add rigidity to the shell 520 along the rim portion 600.

The inner rim 612 of the luggage case 500 may be continuous or discontinuous. The inner rim 612 of the luggage case 500 is continuous through at least one corner regions 560 of the shell 520. In some examples, the inner rim 612 may extend continuously along a majority of the periphery of the luggage case 500. The inner rim 612 may continuously extend between 50 and 90 percent of the periphery of luggage case 500. For example, the inner rim 612 extends along the outer rim 602 through the corner region 560 of the shell 520. In some examples, the inner rim 612 may extend continuously along or around the periphery of the shell 500 save for a portion, or gap, to receive or couple with an insert 650, such as a handle, for the luggage case. Where the inner rim 612 optionally includes a gap for a handle feature or insert 650, the inner rim 612 may define two or more lateral ends 624. The lateral ends 624 may define attachment features 626 to receive or connect with one or more inserts 650, such as a carry handle as described hereinabove with respect to FIGS. 1-9B.

Turning to FIGS. 11A and 11B, a top cross sectional view of the luggage shell 520 and a mould core 703 is depicted. As discussed herein, the luggage shell 500 may be formed by moulding, such as injection moulding, by a mould assembly including a mould core 703. The separation of the luggage shell 520 from the mould core 703 may be similar to the separation of the luggage shell 120 and the mould core 303 discussed herein. For separation of the luggage shell 520 including an inner rim 612 continuous through a corner region 560, the inner rim 612 deflects towards the outer rim 602 or sidewalls 552, 554. The outer rim 602 or sidewalls 552, 554 may also resiliently deflect outwardly also to allow the inner rim 612 to pass over the mould core 703 during extraction. For example, the corner region 560 may stretch or flex to provide the increased space for separation of the mould core 703.

The material of the shell 520 may be similar or different to the material of the shell 120. For example, the shell 520 may be polypropylene, ABS, polycarbonate, glass filled or glass blended materials, or blends and combinations thereof. In some examples, the continuous inner rim 612 may stretching or elastic deformation of a portion of the shell 520 to separate from the mould core 703. To allow for the stretching the material may be more flexible or thinner to reduce resistance to stretching. Polypropylene, or other materials resistant to visual indication of stretching, such as whitening, may be used for the shell 520.

With reference to FIG. 11A, prior to separation from the mould core 703, the inner rim 612 may be separated from the outer rim 602 by a distance 640, which may also be the channel width 640. The channel width 640 may be defined between the inner peripheral edge 620 and the outer peripheral edge 604. Such a configuration may also correspond to a final position of the inner rim 612.

With reference to FIG. 11B, the mould core 703 may be removed in a direction of separation. The direction of separation may be parallel to the view perspective (e.g. into or out of the page). As may be similarly depicted in FIG. 8B and 8D, the inward orientation of the inner rim 612 may cause a portion of the mould core 703 to contact the inner rim 612. As the mould core 703 separates from the luggage shell 520, the inner rim 612 may deflect towards the outer rim 602 or sidewalls 552, 554. For example, a reduced channel width 642 may be defined between the inner rim 612 and the outer rim 602. By deflecting outward, or reducing the channel width 642, the elastic deflection of the inward extending inner rim 612 enables separation of the mould core 703 and the luggage shell 620 without damaging the shell 520. In some examples, the sidewall 552, 554 may also deflect outwardly. In such an example, the inner rim 612 may resiliently deflect a greater distance than the outer rim 602, resulting in the reduced channel width 642.

The deflection of the inner rim 612 may be facilitated by resilient deflection or bending of the supports 622 and the inner rim 612. For example, the non-orthogonal orientation of the supports 622 may enable flexing of the inner rim 612 by dispersing loads across the inner rim 612 while flexing between the outer rim 602 and the inner rim 612. In contrast, orthogonally oriented supports, while optionally useable, may be more rigid and deflect or deform less.

In some examples, the corner region 560 may stretch to provide the increased space for the shell 520 and the mould core 703 to separate. In some examples, both the corner region 560 and the inner rim 612 may stretch or flex, such as in combination with each other. The stretching of the corner region 560 may be along the inner rim 612. The stretching of the shell 520 may be along a portion of the corner region 560 spaced from or adjacent the inner rim 612. For example, the inner rim 612 may resist stretching or deformation. In such an example, the continuous inner rim 612 may assist in maintaining a perimeter dimension of the shell 520, such as for predefined lengths of closure mechanisms such as a zipper tape.

Other examples and implementations are within the scope and spirit of the disclosure and appended claims. For example, features implementing functions may also be physically located at various positions, including being distributed such that portions of functions are implemented at different physical locations. Also, as used herein, including in the claims, "or" as used in a list of items prefaced by "at least one of' indicates a disjunctive list such that, for example, a list of "at least one of A, B, or C" means A or B or C or AB or AC or BC or ABC (i.e., A and Band C). Further, the term "exemplary" does not mean that the described example is preferred or better than other examples.

The foregoing description, for purposes of explanation, uses specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art that many modifications and variations are possible in view of the above teachings.

## Claims

1. A luggage case (100, 500) comprising:
at least one injection moulded shell (118, 120, 520) including a major face panel (156) and at least one sidewall (152, 154, 552, 554) together defining an interior storage volume (130), the sidewall (152, 154, 552, 554) defining at least in part an integrally formed outer rim (202, 602) and an integrally formed inner rim (212, 612) positioned interior of the outer rim (202, 602); and
wherein the inner rim (212, 612) extends along at least a portion of a length of the outer rim (202, 602), and the inner rim (212, 612) extends at an acute angle (240, 406, 412) away from the sidewall (152, 154, 552, 554).

2. The luggage case (100, 500) as defined in claim 1, wherein:
the sidewall (152, 154, 552, 554) extends from along at least a portion of a periphery of the major face panel (156), the sidewall (152, 154, 552, 554) including at least one corner region (160, 560) and the outer rim (202, 602) defined to at least partially extend along the sidewall (152, 154, 552, 554) and the at least one corner region (160, 560); and
the inner rim (212, 612) extends along at least a portion of sidewall (152, 154, 552, 554) and along the at least one corner region (160, 560).

3. The luggage case (100, 500) as defined in any of claims 1-2, wherein:
the inner rim (212, 612) extends around approximately 50-90 percent of the length of the outer rim (202, 602).

4. The luggage case (100, 500) as defined in any of claims 1-3, wherein:
the inner rim (212, 612) extends continuously along a majority of a length of the sidewall (152, 154, 552, 554).

5. The luggage case (100, 500) as defined in any of claims 1-4, wherein:
the inner rim (212, 612) extends around an entirety of the length of the outer rim (202, 602).

6. The luggage case (100, 500) as defined in any of claims 1-5, wherein:
support features (222, 622) extend between the outer rim (202, 602) and the inner rim (212, 612).

7. The luggage case (100, 500) as defined in any of claims 1-6, wherein the outer rim (202, 602) is flush with an exterior surface (138, 210, 538) of at least one sidewall (152, 154, 552, 554).

8. The luggage case (100, 500) as defined in any of claims 1-7, wherein:
at least part of the sidewall (152, 154, 552, 554) extends substantially orthogonally from the major face panel (156).

9. The luggage case (100, 500) as defined in claim 2, wherein:
the sidewall (152, 154, 552, 554) includes a top panel (112) and an opposing bottom panel (114); and
the bottom panel (114) extends from the major face panel (156) at an angle between and including approximately 90 to 98 degrees.

10. The luggage case (100, 500) as defined in any of claims 1-9, wherein the acute angle (240, 406, 412) between the inner rim (212, 612) and the sidewall (152, 154, 552, 554) is approximately between and including 1 and 14 degrees, or is approximately between and including 4 and 6 degrees.

11. The luggage as defined in any of claims 1-10, wherein the inner rim (212, 612) is at an angle of approximately between and including 80 and 94 degrees relative to the major face panel (156).

12. The luggage case (100, 500) as defined in claim 1, wherein the at least one shell (118, 120, 520) comprises:
a first portion of the sidewall (152, 154, 552, 554) oriented orthogonal relative to the major face panel (156) and a second portion of the sidewall (152, 154, 552, 554) oriented at an outward angle (247, 320, 322) to the major face panel (156) greater than the first sidewall (152, 154, 552, 554).

13. The luggage case (100, 500) as defined in any of claims 1-12, wherein:
the inner rim (212, 612) forms an angled surface for sliding contact with a mould core (303, 503) during removal of the shell (118, 120, 520) from a mould (300, 303, 315, 703).

14. The luggage case (100, 500) as defined in any of claims 1-12, wherein:
the inner rim (212, 612) deflects outwardly upon release from a mould core (303, 503), or the inner rim (212, 612) and outer rim (202, 602) deflect outwardly upon release from the mould core (303, 503).

15. The luggage case (100, 500) as defined in claim 1, further comprising:
at least one wheel (140) mounted on a corner region (160, 560) of a bottom panel (114) of the injection moulded shell (118, 120, 520); and
a tow handle (126) mounted on a rear main face panel (156) of the luggage shell (118, 120, 520).
